# EUROPEAN PATENT SPECIFICATION

(11) **EP 4 498 978 B1**
(45) Date of publication and mention of the grant of the patent: **15.07.2026**
(21) Application number: 23716382.9
(22) Date of filing: 29.03.2023
(51) Int. Cl.: A61C 7/10

(54) **AN ORTHODONTIC PALATAL AND JAW EXPANSION DEVICE**
KIEFERORTHOPÄDISCHE GAUMEN- UND KIEFERDEHNVORRICHTUNG
DISPOSITIF ORTHODONTIQUE D'ÉLARGISSEMENT DU PALAIS ET DE LA MÂCHOIRE

(30) Priority: 30.03.2022 TR 202204907
(43) Date of publication of application: 05.02.2025
(73) Proprietor: Aegis Star Dental Technologies Inc., Boston, MA 02116 (US)
(72) Inventor: KELES, Eren Ahmet, 34380 Istanbul (TR); KELES, Ahmet Ozlem, 34380 Istanbul (TR)
(74) Representative: Dennemeyer & Associates S.A.
(86) International application number: PCT/TR2023/050301
(87) International publication number: WO 2023/191758

(56) References cited:
- US-A1- 2007 275 341
- US-A1- 2019 125 495

## Description

The present invention relates to a device used in orthodontic treatment, also called the palatal and jaw expansion device that can be easily attached to and detached from inside the mouth.

A document in the art are exemplified by US 2019/125495 A1.

As it is known, the maxilla consists of two bones and there is a suture between these two bones. Thanks to this anatomical structure, the maxilla can be enlarged with palatal and jaw expansion devices. Use of palatal expansion devices in orthodontic treatments that provide proper alignment of crooked and badly positioned teeth in particular is known. In order to correct any crookedness and provide the space necessary for alignment of the teeth, the palatal and jaw expansion devices are placed in the palatal region between the bone structure and the molar teeth in the upper jaw palatal region and apply pressure on the teeth, providing movement of the upper jaw molar teeth toward the cheeks. Thus, the upper jaw expands and the arch perimeter where the teeth are aligned increases and space is provided for crooked teeth. Depending on the region from where support is taken, the palatal and jaw expansion devices are divided into three main segments as tooth-tissue-supported and/or bone-supported or hybrid support which takes support from both teeth and miniscrews.

The tooth-tissue-supported palatal and jaw expansion devices fulfill their function by receiving support from the teeth and/or the hard and/or soft tissues in the palatal region in order to expand the narrow jaws and move the molar and premolar teeth toward the cheeks. Thereby, in case of crookedness and jaw narrowness, the teeth are enabled to be aligned without tooth extraction and space is provided. The bone tissue-supported palatal expansion devices, on the other hand, are fixed by means of miniscrews or implants on the surface of the upper jaw palate.

In one of the state of the art embodiments, the blocks on the screw move by turning a pointed key in form of a needle around its own axis. In this type of palatal expansion devices, in order to expand the palate of the patient, he/she must fit the key accurately into the hole on the screw and turn the same around its own axis and remove the key when the procedure is completed. However, this procedure is quite difficult for the patient to do, so it is carried out by another person, and since the hole on the screw cannot be accessed when the operation of turning around the own axis cannot be properly carried out, the treatment process is disrupted, leading to greater problems. Another problem occurs in the case that the key with a pointed tip like a needle do not fit accurately into the screw hole while being inserted into the hole. In this case, the key may slip and puncture the palate, causing injury to the patient. The most important problem is that the patient may drop the key into his/her mouth while turning the screw, and there is the risk for the patient to swallow the key.

A state of the art embodiment is disclosed in United States Patent No. US7780445. A palatal expansion device that is opened and closed by means of an arm which is moved by being slid along the screw is disclosed.

Another state of the art document is European Patent Application No. EP2155104. This document discloses a palatal expansion device comprising a crew having at least one activation arm.

The aim of the present invention is the realization of a palatal and jaw expansion device that can be easily attached to and detached from inside the mouth by the doctor, providing a comfortable use.

**In** order to attain the aim of this palatal and jaw expansion device, explicated in the first claim and the respective claims thereof, comprises a movement mechanism that moves the screw with the blocks by means of an arm serving as a lever, and a stronger, safer and more precise device is obtained by establishing a direct connection between the movement mechanism and the stabilization rod by means of the channel provided on the movement mechanism and the fitting of the protrusion provided on the stabilization rod into said channel. Thus, the same is also enabled to open more sensitively by means of the movement of the arm. For example, 0.2 mm opening is provided with one movement of the arm.

By means of the present invention, by means of the arm rotated around the horizontal axis where the screw extends, a palatal and jaw expansion device that is brought to open active or closed passive position only by pushing or pulling the arm is proposed.

By means of the gearwheels forming the movement mechanism and moving in a unidirectional manner, the blocks are enabled to move on the screw in a more precise, accurate and robust manner and are stopped in the desired position. Since the gearwheels can move in one direction, the blocks are prevented from moving backward on the screw and are enabled to maintain their present position.

Threads bored in opposite directions are provided on both sides of the screw. Thus, the blocks placed on both sides of the screws are enabled to move toward each other or away from each other at the same time. **In** the embodiment of the present invention, the blocks only move towards each other as the components are assembled.

A stabilization rod is disposed in parallel with the screw, allowing the blocks to move on the screw in a stabilized manner. The stabilization rod guides the movement of the blocks on the screw. Moreover, by means of the fitting of the protrusion into the channel provided on the movement mechanism, it is provided that the movement mechanism stays on the screw as a whole, thus preventing the sliding of the stabilization rod unilaterally, which is an unwanted event during the loosening process. Moreover, it is also provided that the screw and the stabilization rod stay together while the palatal and jaw expansion device shifts to the open or closed position.

The palatal and jaw expansion device can be attached to the teeth inside the mouth by means of retaining wires. Moreover, with the retaining wires the palatal and jaw expansion device can be fixed directly on the palate by means of miniscrews or implants. Moreover, it can be applied in a hybrid manner by taking support from both teeth and miniscrews. In all three embodiments, the working principle of the palatal and jaw expansion device is the same and it is enough to change the parts on the tip of the retaining wires.

In an embodiment of the present invention, a gradation, on which the protrusion on the stabilization rod and the first set are fitted in the closed position, is provided on the blocks. The depth of this gradation is at least as much as the thickness of the protrusion and the first set, and when fitted in the gradation, the protrusion and the first set flush the surface of the block facing the movement mechanism. Thus, the opening capacity is increased, without increasing the size of the palatal and jaw expansion device, and the blocks are enabled to move more on the stabilization rod

According to the present invention, the palatal and jaw expansion device comprises a first stopper which is provided on both ends of the stabilization rod, which keeps the components forming the palatal and jaw expansion device together and prevents the pieces from disassembling by locking them in place when it reaches maximum opening level by bearing the first stopper against the step inside the first hole that narrows the diameter of the first hole. Thus, the palatal and jaw expansion device in the patient's mouth is prevented from disassembling, and the patient is prevented from swallowing the components.

Moreover, the palatal and jaw expansion device comprises a second stopper which is provided on the second hole surface adjacent to the second set and the first set, which has a diameter larger than the diameter of the second hole, which does not have grooves thereon. Thus, when the palatal and jaw expansion device reaches the maximum opening level, the screw rotates freely in the grooveless second stopper, preventing the components forming the palatal and jaw expansion device from disassembling and falling into mouth of the patient. **In** an embodiment of the present invention, the first gearwheel and the arm are produced as a single piece. Thus, the risk of the arm breaking is minimized. By means of the present invention, by means of the pushing or pulling force applied with a finger on the arm, the palatal and jaw expansion device is enabled to be changed to the open active or passive position.

By means of the present invention, in the orthodontic treatments, a comfortable use of the palatal and jaw expansion device is provided to both the doctor and the patient, and the palatal and jaw expansion device can be attached easily and soundly without loss of time and detached when the upper jaw expansion treatment is completed. By means of the present invention, the palatal and jaw expansion device can be used quite practically by means of the arm. The patient can easily rotate the arm by himself/herself to change the palatal and jaw expansion device to the active or passive position. Since the movement mechanism is a unidirectional gear system, it can be wound like a jack and thus the arm goes loaded and returns empty. Moreover, by means of the present invention, the size can be provided quite small in comparison with other palatal and jaw expansion devices. Thus, the comfort of the patient is increased, allowing the patient to comfortably move his/her tongue. Moreover, the durability of the palatal and jaw expansion device is increased while ensuring a safer use.

A palatal and jaw expansion device realized in order to attain the aim of the present invention is illustrated in the attached figures, where:
Figure 1 - is the view of a palatal and jaw expansion device in the open position.
Figure 2 - is the cross-sectional view of Figure 1.
Figure 3 - is the view of the palatal and jaw expansion device in the closed position.
Figure 4 - is the cross-sectional view of Figure 3.
Figure 5 - is the general view of a screw.
Figure 6- is the general view of a stabilization rod.
Figure 7 - is the top view of the second gearwheel.
Figure 8 - is the sideways view of the second gearwheel.
Figure 9 - is the view of the cross section A-A in Figure 7.
Figure 10 - is the general view of a block.
Figure 11 - is the sideways view of the first set.
Figure 12 - is the view of the first gearwheel and the arm when assembled.
Figure 13 - is the view of the palatal and jaw expansion device attached to the palate.
Figure 14 - is the view of the palatal and jaw expansion device attached to the teeth.

The elements illustrated in the figures are numbered as follows:
1. Palatal and jaw expansion device
2. Screw
3. Stabilization rod
4. Block
5. Movement mechanism
6. Arm
7. Free end
8. Fixed end
9. First gearwheel
10. Second gearwheel
11. First set
12. Second set
13. Pushing member
14. First stopper
15. Retaining wires
16. Claw
17 a., 17 b. Screw threads
18. Protrusion
19. Gradation
20. Step
21. Channel
22. Second stopper
23. First hole
24. Second hole
25. Teeth
26. Housing
27. Headpiece
28. Pipe
29. Third stopper

The palatal and jaw expansion device (1) comprises at least one screw (2); at least two blocks (4) that are positioned on the screw (2) so as to move on the screw (2); at least one stabilization rod (3) whereon the blocks (4) are seated; a movement mechanism (5) disposed at the center of the screw (2); an arm (6) that has a fixed end (8) fixed to the movement mechanism (5) perpendicularly to the horizontal axis where the screw (2) extends; when force is applied on the free end (7), it rotates the movement mechanism (5) whereon the arm (6) is fixed and the screw (2) around the horizontal axis where the screw (2) extends, enabling the blocks (4) to move on the screw (2); a first gearwheel (9) that is disposed on the movement mechanism (5), whereon teeth (25) in various profiles are bored, whereto the arm (6) is fixed and that rotates on the screw (2) around the horizontal axis by the movement of the arm (6); and a second gearwheel (10) that is fixed on the screw (2), that completely contacts the first gearwheel (9) so as to shift to the active position by the movement of the first gearwheel (9), and whereon teeth (25) in matching form with the teeth (25) on the first gearwheel (9) are bored.

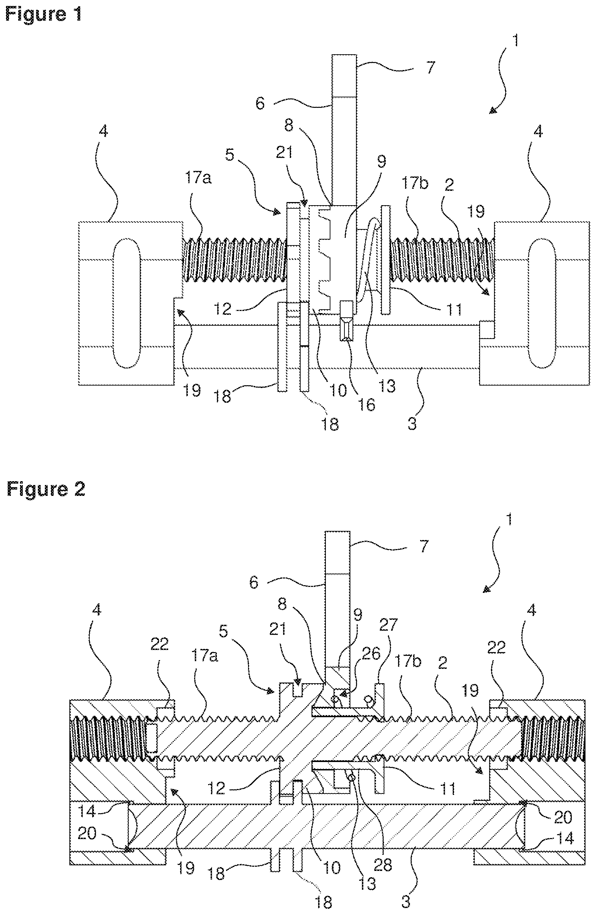

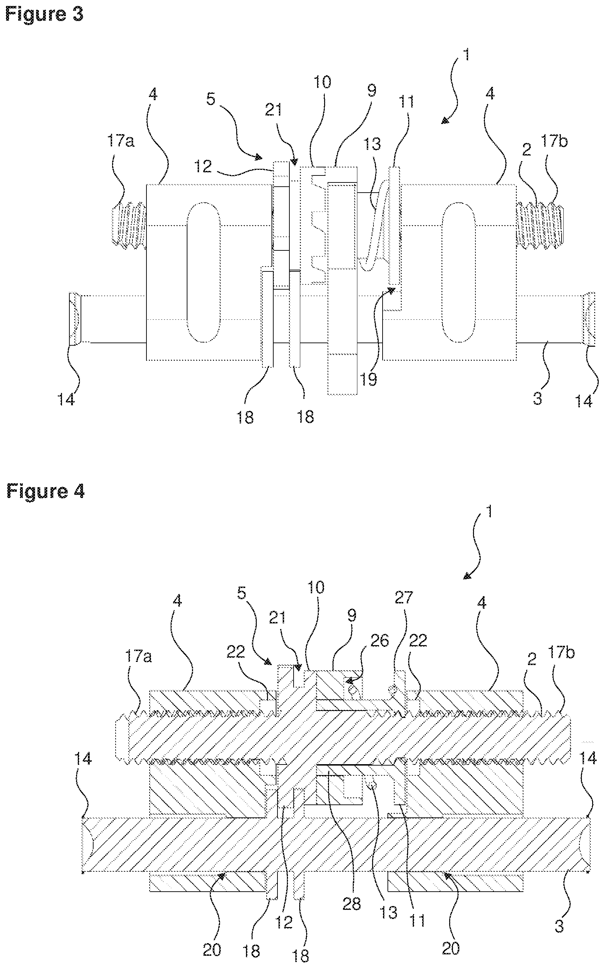

This palatal and jaw expansion device (1) further comprises a first set (11) and a second set (12) that are disposed on the screw (2) and that limit the first and second gearwheels (9 and 10) from both sides; a channel (21) which is provided between the second set (12) and the second gearwheel (10); and two protrusions (18) which are oppositely provided on the stabilization rod (3), which extend towards the movement mechanism (5) and the screw (2), with one thereof being fitted into the channel (21) and the other remaining between the second set (12) and the block (4). The first and second gearwheels (9 and 10) are disposed between the first set (11) and the channel (21). The protrusions (18) on the stabilization rod (3) provide that the movement mechanism (5) to stay on the screw (2) as a whole, preventing the sliding of the stabilization rod (3) unilaterally, which is an unwanted event during the loosening process. In the embodiment of the present invention, while one protrusion (18) on the stabilization rod (3) is fitted into the channel (21), the second set (12) is positioned between the two protrusions (18). Thus, it is also provided that the screw (2) and the stabilization rod (3) stay together while the palatal and jaw expansion device (1) shifts to the open or closed position. In the preferred embodiment of the present invention, the distance between the two protrusions (18) is at least as much as the thickness of the second set (12). In this embodiment, the two protrusions (18) contact both surfaces of the washer-shaped second set (12) through which the screw (2) passes (Figure 1, Figure 2, Figure 3 and Figure 4). In an embodiment of the present invention, the second step (12) is preferably hexagonal. Thus, the second set (12) is enabled to be gripped and rotated when the movement is desired to be reversed.

The palatal and jaw expansion device (1) comprises at least one pushing member (13) between the first gearwheel (9) and the first set (11). **In** this embodiment, the first gearwheel (9) bears against the pushing member (13) disposed between the first set **(11)** and the first gearwheel (9).

The palatal and jaw expansion device (1) is placed inside the mouth by being attached to the palate (X) or the teeth (Y). The arm (6), when a force is applied thereon, functions as a lever and rotates the movement mechanism (5) whereto the fixed end (8) thereof is attached and the screw (2) whereon the movement mechanism (5) is positioned. The arm (6) is fixed perpendicularly to the horizontal axis where the screw (2) extends. The arm (6) is rotated not around its own axis but around the axis where the screw (2) extends. As a result of this rotating operation, the blocks (4) disposed on the screw (2) move on the screw (2) and reach the desired position. The arm (6) moves inside the mouth with an angle of approximately 90 degrees. The arm (6) makes a rotational movement of approximately 90 degrees between the closed position and the open position of the palatal and jaw expansion device (1) and in the closed position thereof inside the mouth the arm (6) stays almost parallel to the base without disturbing the patient. As the arm (6) is shifted from the open position to the closed position, the screw (2) does not wind backward and only the arm (6) and the first gearwheel (9) rotate idle. By means of the claw (16) on the first gearwheel (9), the arm (6) is enabled to be positioned in parallel with the floor and is prevented from moving further in an upward direction. The patient or the doctor can change the palatal and jaw expansion device (1) to the open or closed position by pushing or pulling the arm (6) only with a single finger movement. By means of the present invention, the palatal and jaw expansion device (1) can be changed to the open or closed position comfortably without using any additional tool, without the need for inserting any other tool inside the mouth.

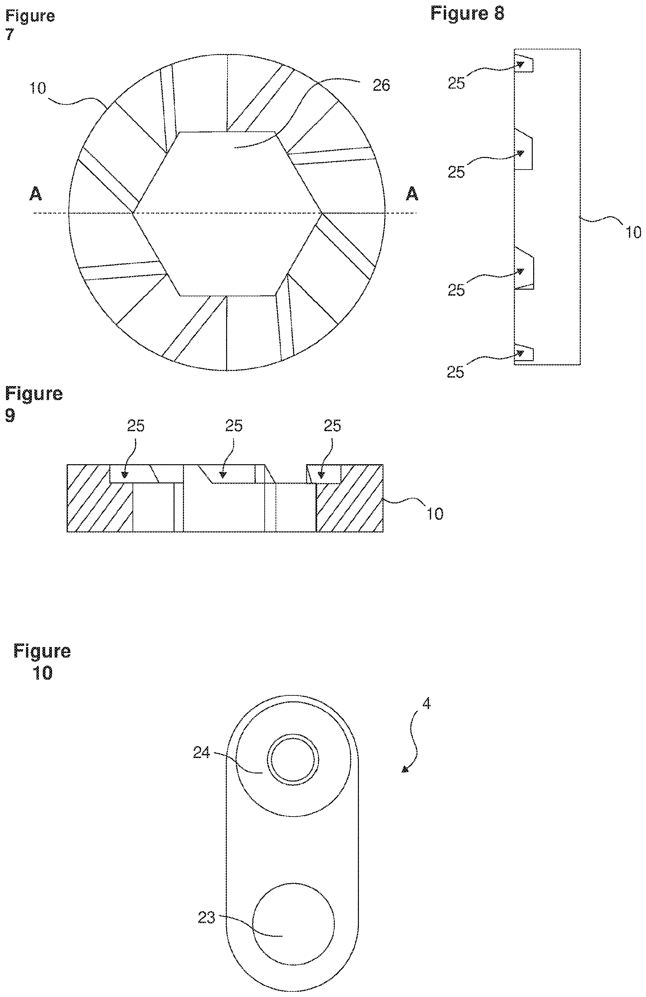

In an embodiment of the present invention, the first and second gear wheels (9 and 10) comprise the teeth (25) that are preferably in the form of sawteeth (Figure 7, Figure 8 and Figure 9).

In this embodiment of the present invention, when a force is applied externally on the free end (7) of the arm (6), the arm (6) rotates the first gearwheel (9) whereto the arm (6) is fixed and hence the second gearwheel (10); the teeth (25) of the second gearwheel (10) completely engage with the teeth (25) of the first gearwheel (9). As a result of the said rotational movement, the second gearwheel (10) fixed to the screw (2) rotates around the horizontal axis of the screw (2), thus enabling the blocks (4) thereon to move forward. The first and second gearwheels (9 and 10) operate in a unidirectional manner. Therefore, when the force applied on the arm (6) is removed and the arm (6) is moved backward to the original position, the first and second gearwheels (9 and 10) maintain their last positions. In this embodiment of the present invention, the arms (6) almost serve as a jackscrew.

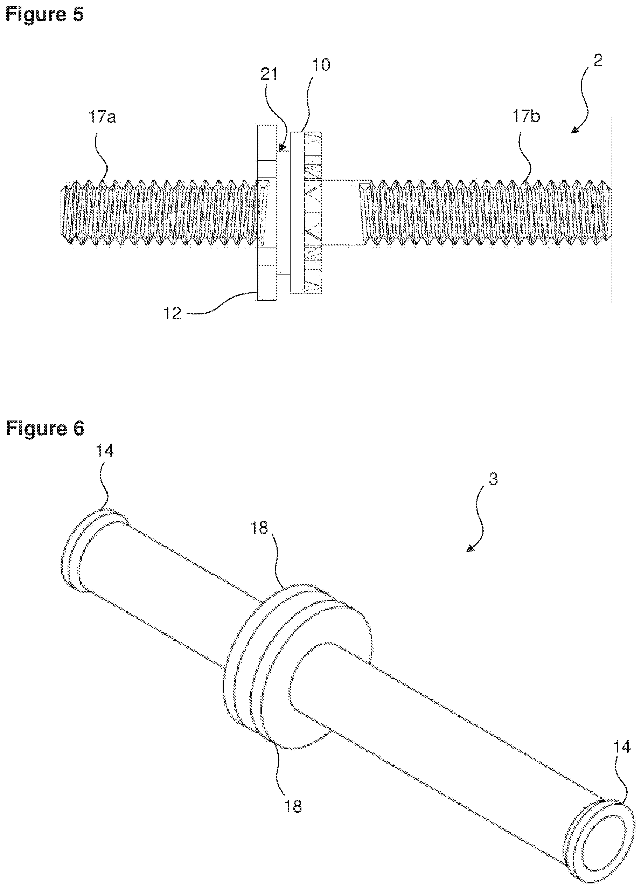

In an embodiment of the present invention, the palatal and jaw expansion device (1) comprises a gradation (19) which is provided on each block (4) and whereon a protrusion (18) on the stabilization rod (3) and the first set (11) are seated in the closed position. In the embodiment of the present invention, the depth of the gradation (19) is at least equal to the thickness of the protrusion (18) and the first set (11). When fitted into the gradation (19), the protrusion (18) and the first set (11) flush the surface of the block (4) facing the movement mechanism (5). Thus, the opening capacity is increased, without increasing the size of the palatal and jaw expansion device (1), and the blocks (4) are enabled to move more on the stabilization rod (3) (Figure 6).

The palatal and jaw expansion device (1) comprises screw threads (17a, 17b) bored on the screw (2) which is divided into two sections by the movement mechanism (5) in a direction on one side of the movement mechanism (5) and in reverse direction on the other side. The screw threads (17a, 17b) being bored in opposite directions provides that the blocks (4) placed on both sides of the screw (2) move so as to come closer to or move away from each other and hence that the palatal and jaw expansion device (1) is changed to the open or closed position. Thus, the blocks (4) on the screw (2) are enabled to move toward or away from the movement mechanism (5) at the same time. If one of the blocks (4) is moving toward the movement mechanism (5), the other also moves toward the movement mechanism (5). On the other hand, if one of the blocks (4) is moving away from the movement mechanism (5), the other also moves away (Figure 5). In addition, there is a notch at both ends of the screw (2) that enables the screw (2) to be rotated from the outside by means of a screwdriver or other tool.

In the palatal and jaw expansion device (1), the movement mechanism (5) and the pushing member (13) are placed between the sections on the screw (2) where the screw threads (17a, 17b) are disposed. Thus, the first and second gearwheels (9 and 10) are enabled to be positioned so as to rotate around the screw (2). Moreover, the second gearwheel (10) is prevented from rotating freely with the screw (2) unless a force is applied by the first gearwheel (9).

In an embodiment of the present invention, the palatal and jaw expansion device (1) comprises a first hole (23) on the block (4), wherein the stabilization rod (3) enters and a second hole (24) wherein the screw (2) enters (Figure 10). The centers of the first hole (23) and the second hole (24) are coaxial. Moreover, grooves in matching form with the screw threads (17a, 17b) are bored on the inner surface of the second hole (24) wherein the screw (2) enters. While the block (4) slides over the stabilization rod (3) which enters the first hole (23), the screw (2) entering the second hole (24) moves in agreement with the threads (17a, 17b) thereon. In this embodiment of the present invention, the palatal and jaw expansion device (1) comprises the first stopper (14) which is provided on both ends of the stabilization rod (3), and a step (20) which is provided in the first hole (23), which narrows down the diameter of the first hole (23) and against which the first stopper (14) bears when the blocks (4) reach the maximum opening level. Thus, when the palatal and jaw expansion device (1) reaches the maximum opening level, the first stopper (14) and the step (20) hold onto each other, thus preventing the components forming the palatal and jaw expansion device (1) from disassembling even if rotated. Moreover, the palatal and jaw expansion device (1) in the patient's mouth is prevented from disassembling, and the patient is prevented from swallowing the components. In the preferred embodiment of the present invention, the first stoppers (14) provided at the ends of the stabilization rod (3) are obtained by applying pressure after all the components are assembled.

Moreover, in another embodiment of the present invention, the palatal and jaw expansion device (1) comprises a second stopper (22) which is provided on the second hole (24) surface next to the second set (12) and the first set (11). The second stopper (22) has a diameter larger than the diameter of the second hole (24), but does not have grooves thereon. Thus, when the palatal and jaw expansion device (1) reaches the maximum opening level, the screw (2) rotates freely in said grooveless second stopper (22) in the block (4), preventing the components forming the palatal and jaw expansion device (1) from disassembling and falling into mouth of the patient. Thus, the durability of the palatal and jaw expansion device (1) is increased while ensuring a safer use.

In the preferred embodiment of the present invention, a spring is used as the pushing member (13). In this embodiment, while the first gearwheel (9) is rotated by means of the arm (6), the pushing member (13) enables the first and second gearwheels (9 and 10) to interlock and move together. The pushing member (13) pushes the first gearwheel (9) toward the second gearwheel (10) and enables the first gearwheel (9) and the second gearwheel (10) to contact each other at all times and the teeth (25) to interlock.

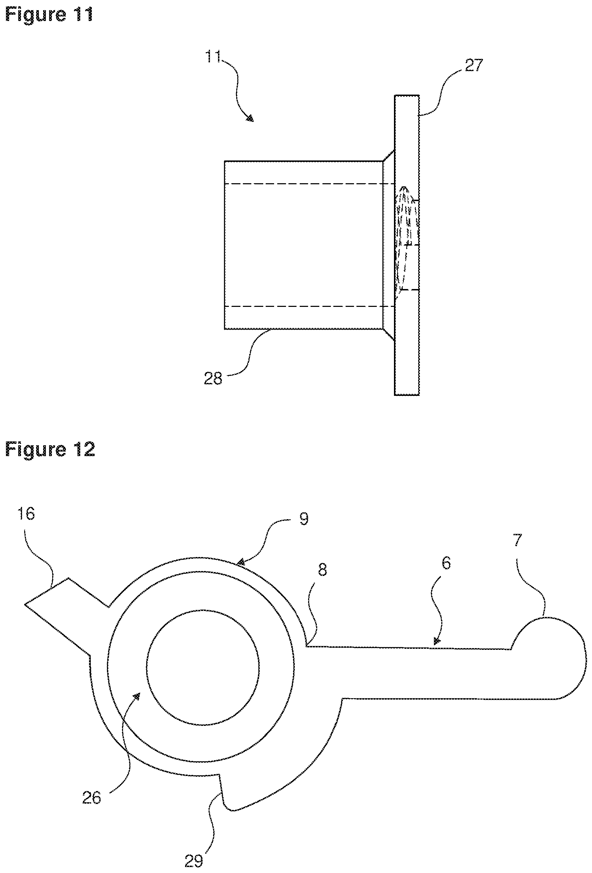

In an embodiment of the present invention, the first set (11) has a stepped form, and comprises a headpiece (27) and a cylindrical pipe (28) which extends perpendicular to the headpiece (27) and is oriented coaxially with the screw (2), which surrounds the screw (2). The diameter of the headpiece (27) is larger than the diameter of the pipe (28) and forms a gradation on the pipe (28) (Figure 11). In this embodiment, the first set (11) is fitted over the screw (2) by means of grooves. In the same embodiment, the palatal and jaw expansion device (1) comprises a housing (26) on the first gearwheel (9) surface facing the first set (11). While one end of the pushing member (13) bears against the headpiece (27) of the first set (11), the other end thereof is fitted into the housing (26) and surrounds the pipe (28) of the first set (11). In an embodiment of the present invention, the housing (26) has a graded form. Thus, space is saved.

In an embodiment of the present invention, the first gearwheel (9) and the arm (6) are produced as a single piece. Thus, the risk of the arm (6) breaking is minimized. In this embodiment of the present invention, the palatal and jaw expansion device (1) comprises a third stopper (29) which is provided on the first gearwheel (9) at an approximately 90-degree angle with the arm (6). By means of the third stopper (29), the arm (6) is enabled to allow opening at the predetermined amount, preferably 0.2 mm (Figure 12).

The palatal expansion device (1) comprises a claw (16) that is disposed on the movement mechanism (5), that prevents rotation of the arm (6) around the screw (2) freely, that enables the arm (6) to stay in the horizontal position inside the mouth, and that serves as a stopper.

The stabilization rod (3) is mounted to the blocks (4) in parallel with the screw (2). The stabilization rod (3) provides that the screw (2) is loosened comfortably against any unwanted pressures that may occur as the screw (2) is loosened and that the blocks (4) on the screw (2) move in a balanced and comfortable manner and that the screw (2) and the blocks (4) are kept together in a durable and rigid manner. The blocks (4) slide on the stabilization rod (3). The stabilization rod (3) serves as a guide for the blocks (4).

In an embodiment of the present invention, the free end (7) of the arm (6) is in the form of a semicircular knob. Thus, the arm (6) is enabled to be controlled more easily and conveniently. Moreover, the tongue is prevented from getting irritated.

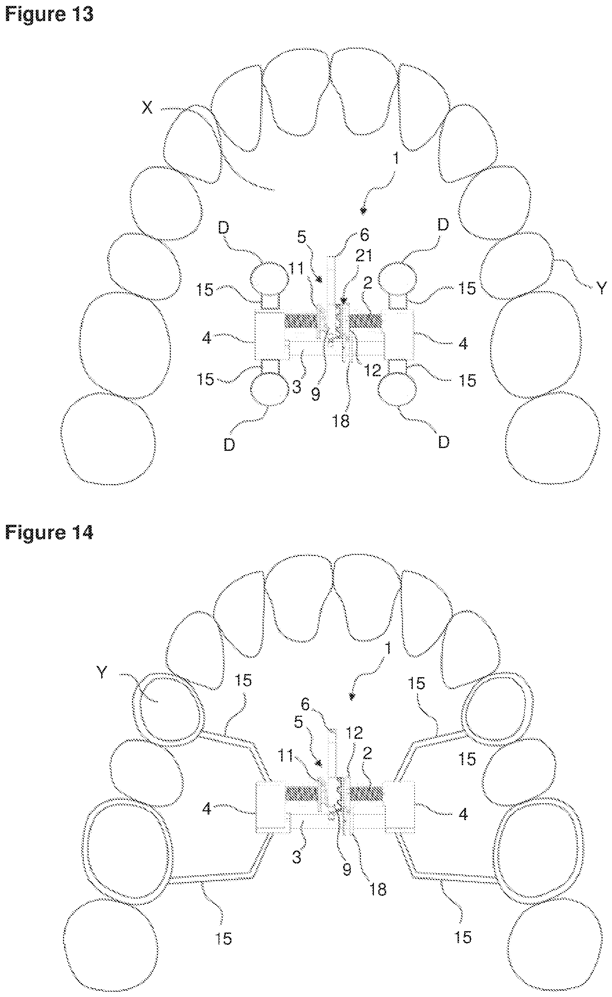

The palatal and jaw expansion device (1) of the present invention can be attached to the teeth (Y) and/or to the surface of the palate (X). The palatal and jaw expansion device (1) comprises minimum two and preferably four retaining wires (15), each of which is fixed to a block (4), one end on the block (4) and the other end on the molar bands, the teeth (Y) or the surface of the palate (X). In the preferred embodiment of the present invention, the retaining wires (15) are in the form of wire and are fixed on the block (4) preferably by means of a laser source, and in the embodiment where the retaining wires (15) are attached to the teeth (Y), rings are provided on the tips of the retaining wires (15) that are fitted onto the teeth (Y). In the version where the palatal and jaw expansion device (1) is fitted on the palate (X), miniscrews and implants (D) are provided on the tips of the retaining wires (15) and the palatal and jaw expansion device (1) is fixed on the surface of the palate (X) by means of the miniscrews and implants (D) (Figure 13 and Figure 14).

In the preferred embodiment of the present invention, the opening capacity of the palatal and jaw expansion device (1) is 10 mm. However, the opening capacity of the palatal and jaw expansion device (1) may vary depending on the needs of the doctor and the patient and can be adjusted linearly or gradually - e.g. as 8 mm, 12 mm or 14 mm, etc.

## Claims

1. A palatal and jaw expansion device (1) comprising at least one screw (2); at least two blocks (4) that are positioned on the screw (2) so as to move on the screw (2); at least one stabilization rod (3) whereon the blocks (4) are seated; a movement mechanism (5) disposed at the center of the screw (2); an arm (6) that has a fixed end (8) fixed to the movement mechanism (5) perpendicularly to the horizontal axis where the screw (2) extends; when force is applied on the free end (7), it rotates the movement mechanism (5) whereon the arm (6) is fixed and the screw (2) around the horizontal axis where the screw (2) extends, enabling the blocks (4) to move on the screw (2); a first gearwheel (9) that is disposed on the movement mechanism (5), whereon teeth (25) in various profiles are bored, whereto the arm (6) is fixed and that rotates on the screw (2) around the horizontal axis by the movement of the arm (6); and a second gearwheel (10) that is fixed on the screw (2), that completely contacts the first gearwheel (9) so as to shift to an active position by the movement of the first gearwheel (9), and whereon teeth (25) in matching form with the teeth (25) on the first gearwheel (9) are provided; a first set (11) and a second set (12) that are disposed on the screw (2) and that limit the first and second gearwheels (9 and 10) from both sides;
• a channel (21) which is provided between the second set (12) and the second gearwheel (10);
• two protrusions (18) which are oppositely provided on the stabilization rod (3), which extend towards the movement mechanism (5) and the screw (2), with one thereof being fitted into the channel (21) and the other remaining between the second set (12) and a respective one of the blocks (4),
• a first stopper (14) which is provided on both ends of the stabilization rod (3) and that prevents the palatal jaw expansion device from disassembling,
• a first hole (23) on each block (4), wherein the stabilization rod (3) enters and a second hole (24) wherein the screw (2) enters and which has grooves on the inner surface thereof in the matching form with the screw threads (17a, 17b) and
• a step (20) which is provided in the first hole (23), which narrows down the diameter of the first hole (23) and against which the first stopper (14) bears when the blocks (4) reach the maximum opening level.

2. A palatal and jaw expansion device (1) as in Claim 1, **characterized by** a gradation (19) which is provided on each block (4) and whereon a protrusion (18) on the stabilization rod (3) and the first set (11) are seated in the closed position.

3. A palatal and jaw expansion device (1) as in Claim 2, **characterized by** the gradation (19) of the depth is at least equal to the thickness of the protrusion (18) and the first set (11).

4. A palatal and jaw expansion device (1) as in Claim 1, **characterized in that** the first and second gearwheels (9, 10) have sawtooth-shaped teeth (25).

5. A palatal and jaw expansion device (1) as in Claim 1, **characterized in that** the first and second gearwheels (9, 10) operate in a unidirectional manner.

6. A palatal and jaw expansion device (1) as in Claim 1, **characterized by** screw threads (17a, 17b) bored on the screw (2) which is divided into two sections by the movement mechanism (5) in a direction on one side of the movement mechanism (5) and in reverse direction on the other side.

7. A palatal and jaw expansion device (1) as in Claim 1, **characterized by** at least one pushing member (13) that is disposed between the first gearwheel (9) and the first set (11).

8. A palatal and jaw expansion device (1) as in Claim 7, **characterized by** a spring used as the pushing member (13).

9. A palatal and jaw expansion device (1) as in Claim 1, **characterized by** a second stopper (22) which is provided on the second hole (24) surface next to the second set (12) and the first set (11).

10. A palatal and jaw expansion device (1) as in Claim 9, **characterized by** the second stopper (22) which has a diameter larger than the diameter of the second hole (24), but does not have grooves thereon.

11. A palatal and jaw expansion device (1) as in any one of the above claims, **characterized by** the first set (11) which has a stepped form, and which comprises a headpiece (27) and a cylindrical pipe (28) which extends perpendicular to said headpiece (27) and coaxially with the screw (2) and which surrounds the screw (2).

12. A palatal and jaw expansion device (1) as in Claim 11, comprising a housing (26) on the first gearwheel (9) surface facing the first set (11), wherein while one end of the pushing member (13) bears against the headpiece (27) thereof, the other end thereof is fitted into the housing (26) and surrounds the pipe (28) thereof.

13. A palatal and jaw expansion device (1) as in any of the above claims, **characterized by** a claw (16) that is disposed on the movement mechanism (5), that prevents rotation of the arm (6) around the screw (2) freely, that enables the arm (6) to stay in the horizontal position inside the mouth, and that serves as a stopper.

14. A palatal and jaw expansion device (1) as in any of the above claims, **characterized by** a third stopper (29) which is provided on the first gearwheel (9) at an approximately 90-degree angle with the arm (6).

## Patentansprüche

1. Gaumen- und Kiefererweiterungsvorrichtung (1), umfassend mindestens eine Schraube (2); mindestens zwei Blöcke (4), die so auf der Schraube (2) positioniert sind, dass sie sich auf der Schraube (2) bewegen; mindestens einen Stabilisierungsstab (3), auf dem die Blöcke (4) platziert sind; einen Bewegungsmechanismus (5), der an der Mitte der Schraube (2) angeordnet ist; einen Arm (6), der ein festes Ende (8) aufweist, das senkrecht zu der horizontalen Achse, in der sich die Schraube (2) erstreckt, an dem Bewegungsmechanismus (5) befestigt ist; wenn Kraft auf das freie Ende (7) angewendet wird, dreht er den Bewegungsmechanismus (5), an dem der Arm (6) befestigt ist, und die Schraube (2) um die horizontale Achse, in der sich die Schraube (2) erstreckt, wodurch ermöglicht wird, dass sich die Blöcke (4) auf der Schraube (2) bewegen; ein erstes Getrieberad (9), das auf dem Bewegungsmechanismus (5) angeordnet ist, auf das Zähne (25) in verschiedenen Profilen gebohrt sind, an dem der Arm (6) befestigt ist, und das sich durch die Bewegung des Arms (6) auf der Schraube (2) um die horizontale Achse dreht; und ein zweites Getrieberad (10), das auf der Schraube (2) befestigt ist, das vollständig in Kontakt mit dem ersten Getrieberad (9) ist, um so eine aktive Position durch die Bewegung des ersten Getrieberades (9) zu verschieben, und auf dem Zähne (25) in zusammenpassender Form mit den Zähnen (25) des ersten Getrieberades (9) bereitgestellt sind; einen ersten Sicherungsrahmen (11) und einen zweiten Sicherungsrahmen (12), die auf der Schraube (2) angeordnet sind und die das erste und das zweite Getrieberad (9 und 10) von beiden Seiten begrenzen;
• einen Kanal (21), der zwischen dem zweiten Sicherungsrahmen (12) und dem zweite Getrieberad (10) bereitgestellt ist;
• zwei Vorsprünge (18), die gegenüberliegend auf dem Stabilisierungsstab (3) bereitgestellt sind und die sich hin zu dem Bewegungsmechanismus (5) und der Schraube (2) erstrecken, wobei einer davon in den Kanal (21) und der andere verbleibende zwischen dem zweiten Sicherungsrahmen (12) und einem jeweiligen der Blöcke (4) eingepasst ist,
• einen ersten Anschlag (14), der an beiden Enden des Stabilisierungsstabes (3) bereitgestellt ist, und der verhindert, dass die Gaumen- und Kiefererweiterungsvorrichtung auseinanderfällt,
• ein erstes Loch (23) an jedem Block (4), in das der Stabilisierungsstab (3) hineinreicht, und ein zweites Loch (24), in das die Schraube (2) hineinreicht und das Rillen auf der Innenfläche desselben in der zusammenpassenden Form mit den Schraubengewinden (17a, 17b) aufweist, und
• eine Stufe (20), die in dem ersten Loch (23) bereitgestellt ist, die den Durchmesser des ersten Lochs (23) verengt und gegen die der erste Anschlag (14) drückt, wenn die Blöcke (4) den maximalen Öffnungsgrad erreichen.

2. Gaumen- und Kiefererweiterungsvorrichtung (1) nach Anspruch 1, **gekennzeichnet durch** eine Abstufung (19) die an jedem Block (4) bereitgestellt ist und auf der in der geschlossenen Position ein Vorsprung (18) an dem Stabilisierungsstab (3) und der erste Sicherungsrahmen (11) platziert sind.

3. Gaumen- und Kiefererweiterungsvorrichtung (1) nach Anspruch 2, **gekennzeichnet dadurch, dass** die Abstufung (19) der Tiefe mindestens gleich der Dicke des Vorsprungs (18) und des ersten Sicherungsrahmens (11) ist.

4. Gaumen- und Kiefererweiterungsvorrichtung (1) nach Anspruch 1, **gekennzeichnet dadurch, dass** das erste und das zweite Getrieberad (9, 10) sägezahnförmige Zähne (25) aufweisen.

5. Gaumen- und Kiefererweiterungsvorrichtung (1) nach Anspruch 1, **gekennzeichnet dadurch, dass** das erste und das zweite Getrieberad (9, 10) auf unidirektionale Weise arbeiten.

6. Gaumen- und Kiefererweiterungsvorrichtung (1) nach Anspruch 1, **gekennzeichnet durch** an die Schraube (2) gebohrte Schraubengewinde (17a, 17b), die durch den Bewegungsmechanismus (5) in zwei Abschnitte in eine Richtung auf einer Seite des Bewegungsmechanismus (5) und in eine umgekehrte Richtung auf der anderen Seite geteilt sind.

7. Gaumen- und Kiefererweiterungsvorrichtung (1) nach Anspruch 1, **gekennzeichnet durch** mindestens ein Schiebeelement (13), das zwischen dem ersten Getrieberad (9) und dem ersten Sicherungsrahmen (11) angeordnet ist.

8. Gaumen- und Kiefererweiterungsvorrichtung (1) nach Anspruch 7, **gekennzeichnet durch** eine Feder, die als das Schiebeelement (13) verwendet wird.

9. Gaumen- und Kiefererweiterungsvorrichtung (1) nach Anspruch 1, **gekennzeichnet durch** einen zweiten Anschlag (22), der an der Fläche des zweiten Lochs (24) neben dem zweiten Sicherungsrahmen (12) und dem ersten Sicherungsrahmen (11) bereitgestellt ist.

10. Gaumen- und Kiefererweiterungsvorrichtung (1) nach Anspruch 9, **gekennzeichnet durch** den zweiten Anschlag (22), der einen größeren Durchmesser aufweist als der Durchmesser des zweiten Lochs (24), aber keiner Rillen darauf aufweist.

11. Gaumen- und Kiefererweiterungsvorrichtung (1) nach einem der obigen Ansprüche, **gekennzeichnet durch** den ersten Sicherungsrahmen (11), der eine gestufte Form aufweist, und der ein Kopfstück (27) und ein zylindrisches Rohr (28) umfasst, das sich senkrecht zu dem Kopfstück (27) und koaxial zu der Schraube (2) erstreckt und das die Schraube (2) umgibt.

12. Gaumen- und Kiefererweiterungsvorrichtung (1) nach Anspruch 11, umfassend ein Gehäuse (26) an der Fläche des ersten Getrieberades (9), die dem ersten Sicherungsrahmen (11) zugewandt ist, wobei während ein Ende des Schiebeelements (13) gegen das Kopfstück (27) davon drückt, das andere Ende davon in das Gehäuse (26) eingepasst ist und das Rohr (28) davon umgibt.

13. Gaumen- und Kiefererweiterungsvorrichtung (1) nach einem der obigen Ansprüche, **gekennzeichnet durch** eine Klaue (16), die auf dem Bewegungsmechanismus (5) angeordnet ist, die verhindert, dass sich der Arm (6) frei um die Schraube (2) dreht, die es ermöglicht, dass der Arm (6) in der horizontalen Position im Inneren des Mundes bleibt und die als ein Anschlag dient.

14. Gaumen- und Kiefererweiterungsvorrichtung (1) nach einem der obigen Ansprüche, **gekennzeichnet durch** einen dritten Anschlag (29), der an dem ersten Getrieberad (9) in einem Winkel von etwa 90 Grad zu dem Arm (6) bereitgestellt ist.

## Revendications

1. Dispositif d'élargissement du palais et de la mâchoire (1) comprenant au moins une vis (2) ; au moins deux blocs (4) qui sont positionnés sur la vis (2) de sorte à se déplacer sur la vis (2) ; au moins une tige de stabilisation (3) sur laquelle sont placés les blocs (4) ; un mécanisme de mouvement (5) disposé au centre de la vis (2) ; un bras (6) qui présente une extrémité fixée (8) fixée au mécanisme de mouvement (5) perpendiculairement à l'axe horizontal où la vis (2) s'étend ; lorsqu'une force est appliquée sur l'extrémité libre (7), elle fait tourner le mécanisme de mouvement (5) sur lequel est fixé le bras (6) et la vis (2) autour de l'axe horizontal où la vis (2) s'étend, permettant aux blocs (4) de se déplacer sur la vis (2) ; une première roue dentée (9) qui est disposée sur le mécanisme de mouvement (5), sur laquelle sont percées des dents (25) de profils variés, à laquelle est fixé le bras (6) et qui tourne sur la vis (2) autour de l'axe horizontal grâce au mouvement du bras (6), et une deuxième roue dentée (10) qui est fixée sur la vis (2), qui entre complètement en contact avec la première roue dentée (9) de sorte à passer en position active grâce au mouvement de la première roue dentée (9), et sur laquelle sont prévues des dents (25) en correspondance de forme avec les dents (25) sur la première roue dentée (9) ; un premier ensemble (11) et un deuxième ensemble (12) qui sont disposés sur la vis (2) et qui limitent les première et deuxième roues dentées (9 et 10) des deux côtés ;
• un canal (21) qui est prévu entre le deuxième ensemble (12) et la deuxième roue dentée (10) ;
• deux protubérances (18) qui sont prévues de manière opposée sur la tige de stabilisation (3), qui s'étendent vers le mécanisme de mouvement (5) et la vis (2), l'une d'entre elles étant insérée dans le canal (21) et l'autre restant entre le deuxième ensemble (12) et l'un respectif des blocs (4),
• une première butée (14) qui est prévue sur les deux extrémités de la tige de stabilisation (3) et qui empêche le dispositif d'élargissement du palais et de la mâchoire de se désassembler,
• un premier trou (23) sur chaque bloc (4), dans lequel pénètre la tige de stabilisation (3) et un deuxième trou (24) dans lequel pénètre la vis (2) et qui présente des rainures sur la surface interne de celui-ci en correspondance de forme avec les filets de vis (17a, 17b) et
• un gradin (20) qui est prévu dans le premier trou (23), qui rétrécit le diamètre du premier trou (23) et contre lequel s'appuie la première butée (14) lorsque les blocs (4) atteignent le niveau d'ouverture maximal.

2. Dispositif d'élargissement du palais et de la mâchoire (1) selon la revendication 1, **caractérisé par** une gradation (19) qui est prévue sur chaque bloc (4) et sur laquelle une protubérance (18) sur la tige de stabilisation (3) et le premier ensemble (11) sont placés dans la position fermée.

3. Dispositif d'élargissement du palais et de la mâchoire (1) selon la revendication 2, **caractérisé par** la gradation (19) de la profondeur qui est au moins égale à l'épaisseur de la protubérance (18) et du premier ensemble (11).

4. Dispositif d'élargissement du palais et de la mâchoire (1) selon la revendication 1, **caractérisé en ce que** les première et deuxième roues dentées (9, 10) ont des dents en forme de dents de scie (25).

5. Dispositif d'élargissement du palais et de la mâchoire (1) selon la revendication 1, **caractérisé en ce que** les première et deuxième roues dentées (9, 10) fonctionnent d'une manière unidirectionnelle.

6. Dispositif d'élargissement du palais et de la mâchoire (1) selon la revendication 1, **caractérisé par** des filets de vis (17a, 17b) percés sur la vis (2) qui est divisée en deux sections par le mécanisme de mouvement (5) dans une direction d'un côté du mécanisme de mouvement (5) et dans une direction inverse de l'autre côté.

7. Dispositif d'élargissement du palais et de la mâchoire (1) selon la revendication 1, **caractérisé par** au moins un élément de poussée (13) qui est disposé entre la première roue dentée (9) et le premier ensemble (11).

8. Dispositif d'élargissement du palais et de la mâchoire (1) selon la revendication 7, **caractérisé par** un ressort utilisé en tant que l'élément de poussée (13).

9. Dispositif d'élargissement du palais et de la mâchoire (1) selon la revendication 1, **caractérisé par** une deuxième butée (22) qui est prévue sur la surface du deuxième trou (24) à côté du deuxième ensemble (12) et du premier ensemble (11).

10. Dispositif d'élargissement du palais et de la mâchoire (1) selon la revendication 9, **caractérisé par** la deuxième butée (22) qui présente un diamètre plus grand que le diamètre du deuxième trou (24), mais ne présente pas de rainures sur celle-ci.

11. Dispositif d'élargissement du palais et de la mâchoire (1) selon l'une quelconque des revendications ci-dessus, **caractérisé par** le premier ensemble (11) qui présente une forme étagée, et qui comprend une tête (27) et un tuyau cylindrique (28) qui s'étend perpendiculairement à ladite tête (27) et coaxialement à la vis (2) et qui entoure la vis (2).

12. Dispositif d'élargissement du palais et de la mâchoire (1) selon la revendication 11, comprenant un logement (26) sur la surface de la première roue dentée (9) faisant face au premier ensemble (11), dans lequel tandis qu'une extrémité de l'élément de poussée (13) s'appuie contre la tête (27) de celui-ci, l'autre extrémité de celui-ci est insérée dans le logement (26) et entoure le tuyau (28) de celui-ci.

13. Dispositif d'élargissement du palais et de la mâchoire (1) selon l'une quelconque des revendications ci-dessus, **caractérisé par** une griffe (16) qui est disposée sur le mécanisme de mouvement (5), qui empêche la rotation libre du bras (6) autour de la vis (2), qui permet au bras (6) de rester dans la position horizontale à l'intérieur de la bouche et qui sert de butée.

14. Dispositif d'élargissement du palais et de la mâchoire (1) selon l'une quelconque des revendications ci-dessus, **caractérisé par** une troisième butée (29) qui est prévue sur la première roue dentée (9) à un angle d'environ 90 degrés avec le bras (6).
